# EUROPEAN PATENT APPLICATION

(11) **EP 0 586 169 A1**
(43) Date of publication of application: **09.03.1994**
(21) Application number: 93306672.2
(22) Date of filing: 23.08.1993
(51) Int. Cl.: B23Q 7/14, B23Q 7/04

(54) **Loading/unloading station for automated machining system**

(30) Priority: 29.08.1992 GB 9218444
(71) Applicant: Renishaw plc, Wotton-Under-Edge Gloucestershire GL12 8JR (GB)
(72) Inventor: Saunders, Marc Thomas Berkeley, Cheltenham, Gloucestershire GL52 6ED (GB); Buckingham, Mark Antony, Gloucestershire GL12 7AZ (GB); McMurtry, David Roberts, Gloucestershire GL12 7EF (GB)
(74) Representative: Jackson, John Timothy

(57) **Abstract**

The automated machining system has carousels 15 which can be wheeled to and from a machine tool. The carousels contain a number of cassettes 10, each holding a plurality of workpieces, tools or other artefacts 26. A transfer arm 51,52 slides each cassette 10 onto a turntable 36 of a loading/unloading station 3. Here, the workpieces, tools or artefacts 26 are loaded or unloaded manually, in accordance with instructions from a computer 100. The computer 100 is connected in a network which also includes computers for controlling the machine tools. Over this network, the computer 100 receives status information and instructions, which govern the loading and unloading process for the carousel 15.

## Description

This invention relates to automated machining systems. More particularly, it relates to apparatus for loading and unloading workpieces, tools or other artefacts in such a system.

Our International Patent Application No. WO 92/22785 describes an automated machining system in which workpieces, tools or other artefacts may be loaded onto pallets of a special type, referred to below as cassettes. Alternatively, the cassettes themselves may form workpieces or artefacts. It also describes a carousel comprising a chain conveyor for holding a plurality of cassettes, e.g. fifty. The carousel is portable and can be wheeled up to and away from its operating position next to the machine tool, from where the cassettes can be selectively loaded into the machine tool under computer numerical control. Such a system enables unmanned operation of the machine tool for extended periods of time.

The preferred embodiment of the present invention provides apparatus and methods whereby the cassettes can be loaded with blank workpieces, tools and other artefacts, and whereby such cassettes can be loaded into the carousel, at a station remote from the machine tool, ready for a machining operation. The preferred embodiment of the invention also enables finished workpieces, broken or worn tools and other artefacts which have been finished with to be unloaded from the carousel and from the cassettes. These processes are referred to below as "kitting" the cassettes and carousel.

The preferred embodiment of the invention will be described with reference to the accompanying drawings, wherein:
Fig 1 is a schematic block diagram of the overall arrangement, and
Fig 2 is a side view of a kitting station and carousel.

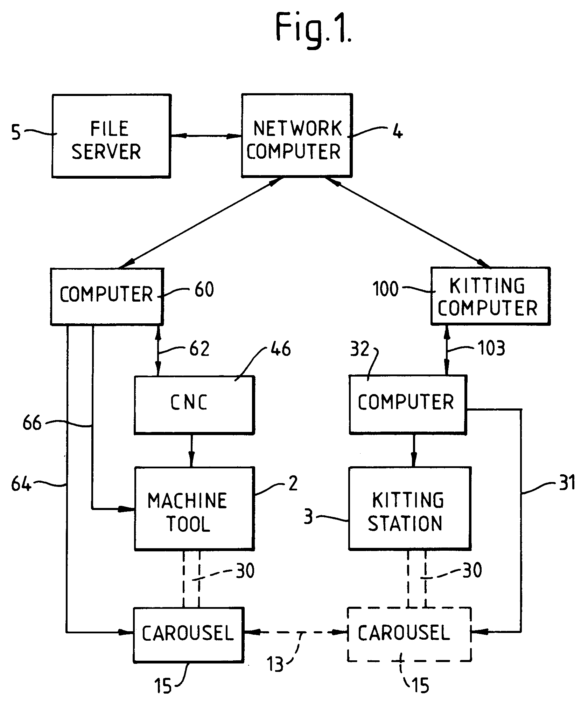

Fig 1 shows a machine tool 2, by the side of which is docked a carousel 15, exactly as shown in the above-mentioned international patent application (to which reference should be made for further detail). The carousel 15 can be disconnected from the machine tool 2 and wheeled (e.g. on a battery-powered fork lift pallet truck) to a kitting station 3, as indicated by a broken line 13. Here it may be kitted as described in more detail below.

The machine tool 2 has its own computer numerical control (CNC) 46, linked to a personal computer 60 by an RS232 link 62. The computer 60 has a connection 64 for controlling the carousel 15, and a connection 66 for controlling a cassette transfer mechanism and indexing spindle, which are provided on the machine tool as described in the above international application.

The kitting station 3 is likewise provided with a computer control, in the form of two personal computers 32 and 100. The computer 32 has a connection 31 for controlling the carousel 15, and also controls a cassette transfer mechanism of the kitting station 3, as described in more detail below. These actions are performed upon commands from the computer 100, relayed over an RS232 link 103, which also returns status responses from the computer 32.

The computers 100,60 are each linked into a local area network controlled by a network computer 4, having a file server 5. The network may also be linked to many other machine tools and other machines in a factory, and can provide direct numerical control of the machine tool 2, if desired.

Where there is more than one machine tool, it is of course possible for each of them to have facilities for docking a respective carousel 15. Each of the carousels 15 can then be removed to the kitting station 3, for kitting as described below.

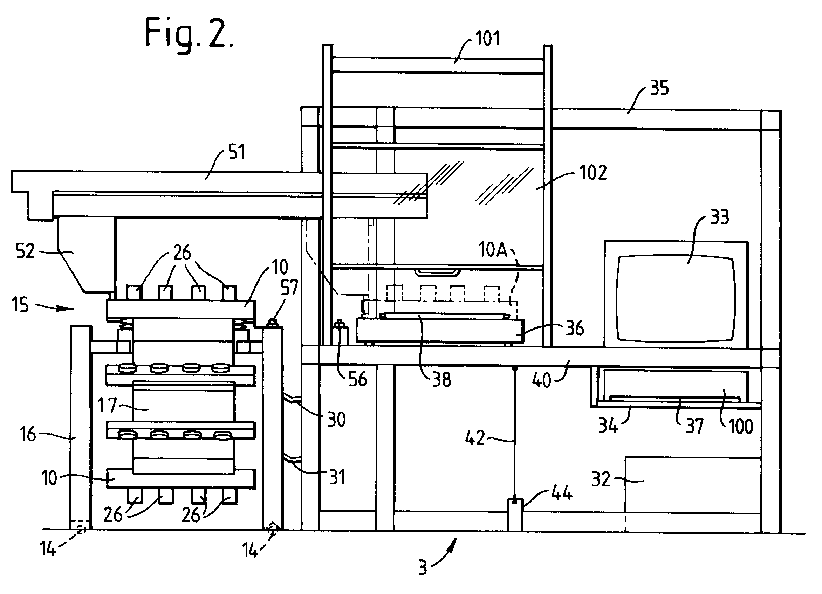

Fig 2 shows the kitting station 3 in more detail. It comprises a framework 35 having a worktable 40 at which a person operating the kitting station can stand or be seated. A shelf 34 is provided for supporting the computer 100. A keyboard 37 and a mouse for this computer may be located on this shelf, or they may be located above it with a display screen 33 of the computer. The computer 32 resides below the worktable 40, e.g. in a cabinet which may be similar to a cabinet provided for the computer 60 located by the machine tool 2. If more convenient the computers 100 and 32 may be located elsewhere, e.g. on the worktable 40.

In practical use, the kitting station is laid out in such a manner that the operator has easy access to all the raw materials, workpieces, tools, artefacts, cassettes, etc. needed for the kitting of a carousel 15.

Fig 2 also shows a carousel 15 docked adjacent the kitting station 3. The carousel is lowered onto mounts 14, which support it in a defined position, in the same way as it is supported when docked adjacent the machine tool 2. When the carousel 15 is correctly located on the mounts 14, air and electrical power supply lines and control lines 30,31 are connected between the carousel and the kitting station 3, by means of plug-and-socket connections. These connections enable the carousel to be controlled from the computer 32. They are similar to the connections provided between the carousel and the machine tool 2 when docked there, which enable the carousel to be controlled from the computer 60 of the machine tool.

The carousel 15 comprises a framework 16. It has a chain conveyor 17 upon which can be loaded a number (e.g. fifty) of cassettes 10, each of which may hold several workpieces, tools or artefacts 26, as described in the above-mentioned international patent application. The chain conveyor 17 can be actuated under control of the computer 32 to bring each of the cassettes 10 in line with guide wheels 57 on the framework 16 and with guide wheels 56 and a transfer arm 51,52 on the kitting station 3. The transfer arm 51,52 is also controlled from the computer 32, and is similar to the transfer arm provided on the machine tool 2, as described in the above international patent application. Thus, under control from the computer 32, each desired cassette 10 can in turn be slid off the conveyor 17 via the guide wheels 57 and 56, to a turntable 36 on the kitting station. The cassette is clamped into place on the turntable 36 by a clamp 38 in the position shown by broken lines 10A. The clamp 38 could be actuable from the computer 32, but for safety reasons we prefer that it should be controlled manually.

For reasons of safety, the turntable 36, guide wheels 56 and the portion of the transfer arm 51 which overhangs the surface of the workbench are enclosed by guards. These comprise a sliding door 102, mounted in a frame 101 surrounding the turntable, which restricts the motion of the transfer arm 51,52 whenever it is open. It is therefore impossible for the operator to have access to the cassette 10 whilst it or the transfer arm 51,52 are in motion.

The turntable 36 has sensors which monitor its rotary position and the condition of the clamp 38. The turntable must be orientated correctly and the clamp 38 released before a transfer can be attempted. The computer 32 checks the status of these two sensors prior to causing the transfer arm 51,52 to actuate. Once a transfer is in motion the operator cannot access the clamp switches or the turntable since these are both situated inside the guard.

When located on the turntable 36, the cassette 10 is in position to be kitted by the person operating the kitting station. This may first involve the removal of finished workpieces or some or all of the tools or other artefacts from the cassette, e.g. tools which are broken or worn. It may then involve refilling the cassette with blank workpiece billets, fresh tools or artefacts. This kitting operation is carried out manually in accordance with instructions displayed on the screen 33 of the computer 100, as described below.

So that the person operating the kitting station can access both sides of the cassette 10 when located on the turntable 36, the turntable can be rotated manually in increments of 90° about a vertical axis. A detent mechanism (not shown) is provided between the worktable 40 of the kitting station and the turntable 36, so that the turntable can be located positively in any of the 90° positions. When rotation is required, this detent mechanism can be released by the operator, using a foot pedal 44 acting via a spring-tensioned wire 42. Alternatively, of course, the detent mechanism and the rotation of the turntable may be entirely under control from the computer 32.

The computer 100 runs a software program for controlling the kitting station, which program will be referred to below as the "kitting program". The purpose of the kitting program, in brief, is to receive a status/control file giving information about the carousel 15 from the network computer 4, together with a set of instructions and data referred to below as a "kitting instruction". The kitting program then runs the kitting instruction and controls the sequence of operations at the kitting station in accordance with it. Where operations are to be performed manually by the operator, instructions are given to him on the screen 33, and he confirms his actions and gives any other necessary information via the keyboard 37 and mouse, if provided. Finally, the kitting program compiles a modified status/control file unique to the carousel which has now been kitted, and this file is transmitted to the network computer 4 for storage on file server 5. The carousel 15 can now be removed from the kitting station, and either stored until required or taken straight to one of the machine tools 2. When it is plugged into the machine tool 2, the computer 60 of the machine tool retrieves the corresponding status/control file from the file server 5 via the network computer 4, for use in machining workpieces on the cassettes in the carousel.

The kitting program is intelligent and can choose to run "loading", "unloading" or "recycle" kitting instructions. Which form of instruction is chosen depends on the status of the carousal on arrival at the kitting station. An empty carousel will require loading. A carousel which has returned from the machine tool will be either recycled (i.e. kitted for the same machining operations as previously) or unloaded, according to the workload on the system.

The file server holds as many different kitting instructions as required. Each instruction relates to the way a cassette must be kitted to produce certain parts or combinations of parts on the machine tool.

These operations will now be described in more detail.

Each carousel has a unique six bit identification number permanently stored in a circuit connected to the control lines 31. When the carousel is plugged into the kitting station, the kitting program interrogates this circuit to determine the identity of the carousel, and retrieves the corresponding status/control file from the file server 5. If the carousel has already been processed by a machine tool 2, then the status/control file will have been previously written by the CNC control 46 of the machine tool. It consists of an ASCII file containing status information for each of the fifty cassettes in the carousel. For each cassette, this status information is in the form of an eight byte word, each byte representing a digit from 0 to 9. One or more of these bytes firstly identifies the type of cassette (e.g. whether it holds fixtured workpieces, milling tools to be picked up by the machine tool spindle, turning tools, workpieces which are picked up from the cassette to be turned against such turning tools, etc.). Secondly, other bytes in the status information give the current status of the various workpieces or tools on the cassette. In the case of tools, this may include an indication that the machine tool has detected that the tool is broken, and requires replacement. In the case of workpieces, the status information may include an indication of any workpieces which have been rejected by an in-cycle gauging process on the machine tool, and which should be scrapped or reworked. It may also include an indication of any workpieces which have not been processed, e.g. because of a tool breakage, and which can therefore remain in the cassette for future processing. Finally, a further byte or bytes in the status information may indicate various errors or system failures detected by the machine tool CNC 46, for example if the CNC detects that the cassette actually presented to it does not correspond to the information in the status/control file.

Having received this status information, the kitting program may first update a tool life monitoring system on the file server 5. It does this by decrementing remaining life information for each tool, based upon the workpieces produced as shown by the status/control file, and upon a knowledge of which tools are used for each workpiece.

The kitting program now proceeds to cycle through each of the cassettes on the carousel, controlling the kitting operation and providing the operator with instructions for the various manual tasks involved. Kitting instructions are retrieved from the file server in accordance with the status information derived previously, which is taken into account throughout the kitting process.

Assuming that the carousel has previously been processed by the system and that it is to undergo the same machining processes again (a recycle operation), the kitting program will use the status information to ensure, for example, that finished workpieces will be removed and replaced by blank workpieces, that worn or broken tools will be replaced, and that cassettes upon which no action is required will be ignored and left in the carousel.

The kitting program causes the computer 32 to command the conveyor 17 of the carousel to present each required cassette for automatic loading by the transfer arm 51,52 onto the turntable 36; to give the operator the necessary instructions for the manual operations required to kit the cassette; and to return the cassette automatically to its position on the conveyor 17 of the carousel. The instructions to the operator appear on the screen 33 and may, for example, include instructions to remove or replace workpieces, tools and other artefacts at various locations on the cassette. They may also include instructions to operate the clamp 38, to rotate the turntable 36, or to remove or replace the entire cassette. At the end of the kitting process, the kitting program instructs the operator to disconnect the kitted carousel from the kitting station and to wheel it away, either to a location where it is stored until required, or to be docked immediately with a machine tool 2.

Also at the end of the kitting process, the kitting program generates the necessary modified status/control file, reflecting the newly kitted status of the carousel, and stores it on the file server 5 for future use by the machine tool's CNC 46. The eight byte words in the status/control file indicate to the CNC 46 the type of each cassette, as before. For each cassette, they also indicate what workpieces are to be produced, or whether the cassette holds tools which are to be used in common for several different workpiece types. This file also gives a number to identify the CNC program which the CNC 46 will need to use for each workpiece type, and gives the starting locations at which the CNC 46 will find each of the tools which it needs. Desirably, the kitting program may first call up from the file server 5 all the CNC programs which the machine tool will require when processing the carousel, and concatenate them onto the status/control file, ready for use by the CNC 46. The required CNC programs can be called up by statements in the kitting program.

In due course, when the kitted carousel is docked with the machine tool 2, a program in the computer 60 identifies the carousel from its six bit identification number. This causes the computer 60 to retrieve the corresponding status/control file from the file server 5, and to feed it across the RS232 link 62 to the CNC 46. A program in the CNC 46 now decodes the eight byte status words for each cassette, chops up the concatenated CNC programs, and stores them in the CNC's memory in a form ready for machining workpieces on the cassettes in the carousel 15 in accordance with the status/control information in the status words. The machining operations then proceed in a generally conventional fashion, each of the stored CNC programs being called as required. However, where the CNC program calls for operation of the carousel 15 or of the transfer mechanism or indexing spindle of the machine tool, the CNC requests the computer 60 to carry out these operations. This obviates the need to interface these devices directly to the CNC 46, and allows the necessary low level control routines to be resident in the computer 60 instead of in the CNC.

When machining is completed, the status/control file is updated, either by the stored CNC programs or by the main routine resident in the CNC 46, to reflect the new status of the workpieces and tools in the carousel 15. This file is then stored on the file server 5 via the computer 60, ready for use when the carousel 15 next passes through the kitting station 3.

The description given above was of the running of a recycle kitting instruction, assuming that the carousel 15 was to be kitted so as to undergo the same machining processes as on a previous occasion. If the carousel is not to undergo the same machining processes, the kitting instructions presented by the kitting program will be of a special unloading type. These will include commands for presenting every cassette in turn to the operator, and for removing or replacing any workpieces or tools on that cassette as required, in accordance with the status information. The operator is then instructed to unclamp the cassette from the turntable 36 and to remove it into an appropriate specified storage location. After running the kitting program, the carousel can then be removed from the kitting station, or it can remain in place to be kitted in accordance with completely new kitting instructions, as described below.

Where an empty carousel is to be kitted, the kitting instructions presented by the kitting program will be special loading instructions. These contain commands to the operator to retrieve cassettes from specified storage locations, and to place them on the turntable 36 for insertion on the carousel. The cassettes will preferably have been pre-kitted during the previous running of an unloading instruction, before they were stored. Alternatively, however, the loading instruction may contain commands for loading workpieces, tools and/or artefacts onto the cassettes when they are on the turntable.

The various different kitting instructions for the cassettes are selected by the kitting program in accordance with orders received for various products and parts which are to be produced, which will be referred to as works order. Works orders can be recorded for eventual allocation to a particular carousel. This allocation process is managed on the computer 100 which informs the operator as to which cassettes 10 will be required to service the works order. Orders may be grouped together so that the carousel can be filled, thus increasing utilisation of the machine tool 2. The allocation of works orders to carousels can happen either when a carousel becomes available, or, possibly, whilst the carousel is occupied with the previous order. This latter method is desirable since it minimises the time that the carousel 15 has to spend away from the machine tool 2.

The commands presented to the operator via the screen 33 will vary according to the selected instruction. These instructions are held on the file server 5 and consist of both textual and graphic information. They may be revised from time to time, and so they are held in such a way that control can be exercised over the issue of new revisions, in the same way as the issue of revised drawings and revised CNC programs is normally controlled in a manufacturing company.

Of course, modifications may be made to the specific embodiment described above. For example, although the computer 60 has been described as controlling various devices and processes, nevertheless this computer may be dispensed with if the CNC 46 of the machine tool is sufficiently powerful and capable of controlling the devices concerned. Also, it is not necessary to have a network connecting the control systems of the machine tool 2 and the kitting station 3. Instead, the kitting instructions and other files could be stored in the computer 100, and the status/control files could be transferred between the various computers on a suitable storage medium such as a floppy diskette.

## Claims

1. A loading and unloading station (3) for an automated machining system, the system including at least one carousel (15), the carousel carrying a plurality of pallets or cassettes (10), each pallet or cassette holding a plurality of workpieces, tools or other machining artefacts (26), the station including means (51,52) for transferring each pallet or cassette to a working area (36,40) in which said workpieces, tools or artefacts are loaded into or unloaded from it, and for transferring said pallet or cassette back to the carousel.

2. A station according to claim 1, including means (36) for orienting the pallet or cassette (10) in said working area.

3. A station according to claim 1 or claim 2, including a computer system (32,100) for controlling the loading or unloading of the pallet or cassette (10).

4. A station according to claim 3, wherein said computer system (100) gives instructions for manual loading and unloading of the pallet or cassette (10).

5. A station according to claim 3 or claim 4 wherein said computer system (100) is programmed to receive status information, relating to the status of said workpieces, tools or artefacts (26), and controls the unloading in accordance therewith.

6. A station according to claim 3, claim 4 or claim 5 wherein said computer system (100) is programmed to write status information, relating to the status of said workpieces, tools or artefacts (26) which have been loaded into the carousel (15).

7. A station according to claim 6, wherein said computer system (100) is programmed to include information relating to CNC programs with said status information, said CNC programs being for use with the workpieces, tools or artefacts (26) which have been loaded.

8. A station according to any one of claims 3 to 7, wherein said computer system (100) is programmed to retrieve instructions for loading or unloading the pallet or cassette (10).
